# EUROPEAN PATENT APPLICATION

(11) **EP 1 659 775 A1**
(43) Date of publication of application: **24.05.2006**
(21) Application number: 05256623.9
(22) Date of filing: 25.10.2005
(51) Int. Cl.: H04N 1/387

(54) **Apparatus and method for trimming picture in digital camera**

(30) Priority: 22.11.2004 KR 2004095908
(71) Applicant: Samsung Electronics Co., Ltd., Suwon-si, Gyeonggi-Do (KR)
(72) Inventor: Kim, Kyung-hoon, Suwon-si Gyeonggi-do (KR); Kim, Du-il, Yeongtong-gu Suwon-si Gyeonggi-do (KR)
(74) Representative: Waddington, Richard

(57) **Abstract**

An apparatus and method for trimming a picture in a digital camera are provided. A trimming apparatus in a digital camera having an external window (420) includes a black bar determiner (310) which determines a size of a black bar (450) used to cover a part of the external window (420) based on ratio information of a printing paper received from a printer (340); a picture changing unit (330) which changes the size or position of a picture, or both the size and position of the picture, based on a user input signal to create a display picture on the external window (420); and a coordinate determiner (320) which determines coordinates of the display picture based on the display picture and the size of the black bar (450). The trimming apparatus and a trimming method make it possible to fix an external window (420) of a digital camera and move a picture, thereby providing a user with an accurate way to select a trimming picture.

## Description

Apparatuses and methods consistent with the present invention relate to trimming a picture in a digital camera, and more particularly, to easily trimming a picture displayed on a liquid crystal display (LCD) of a digital camera.

Trimming generally includes selection, enlargement, and printing of a desired part of a picture taken by a camera. Trimming in a digital camera includes selecting a part of a picture displayed on an external window of the digital camera, and printing the selected part of the picture using a printer.

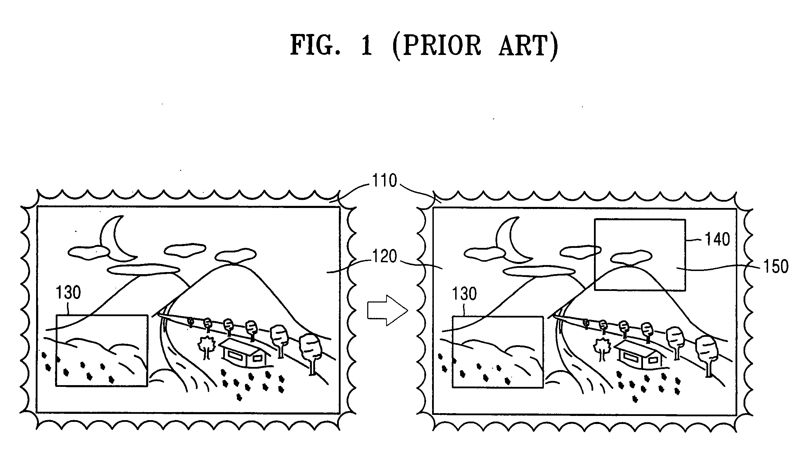

FIG. 1 is a diagram illustrating conventional trimming performed in a digital camera. Referring to FIG. 1, a full picture 120 is displayed on an external window 110 of the digital camera. After a user selects a trimming function, rectangular trimming blocks 130 and 140 are formed inside the external window 110. The user then selects a trimming picture 150 by moving the rectangular trimming blocks 130 and 140. The trimming picture 150 is specified using trimming coordinates, which are geometrical coordinate values, e.g., coordinates of a left upper vertex and a right lower vertex.

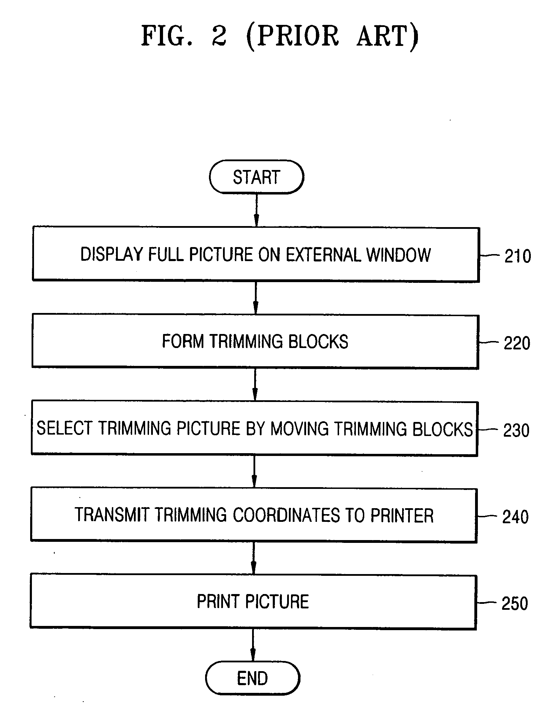

FIG. 2 is a flowchart illustrating a conventional trimming method. Referring to FIG. 2, the full picture 120 is displayed on the external window 110 of the digital camera (Operation 210). The user selects the trimming function of the digital camera in order to generate the rectangular trimming blocks 130 and 140 inside the external window 110 (Operation 220). Then the user selects the trimming picture 150 by moving the rectangular trimming blocks 130 and 140 using a moving key of the digital camera (Operation 230). The digital camera transmits trimming coordinate values that specify an image file of the full picture 120 and the selected trimming picture 150 to a printer (Operation 240). The printer creates the picture by image-processing the image file, and prints the trimming picture 150 specified by the trimming coordinate values in the created picture on a predetermined printing paper.

According to the conventional trimming method, the external window 110 of the digital camera displays the full picture 120, while the trimming picture 150 is displayed as a part of the external window 110. Therefore, it is difficult to select the trimming picture. In particular, since the digital camera has a small-sized external window (e.g., less than 2 inches), it is very difficult to accurately select the trimming picture.

Exemplary embodiments of the present invention include a trimming apparatus and a trimming method for fixing an external window of a digital camera and moving a picture, thereby providing a user with an accurate way to select a trimming picture.

According to an aspect of the present invention, there is provided a trimming apparatus in a digital camera having an external window, the trimming apparatus comprising: a black bar determiner which is operable to determine a size of a black bar used to cover a part of the external window based on ratio information of a printing paper received from a printer; a picture changing unit which is operable to change a size or a position of a picture, or both the size and the position of the picture, based on a user input signal to create a display picture on the external window; and a coordinate determiner which is operable to determine coordinates of the display picture based on the display picture and the size of the black bar.

The black bar determiner may be operable to form the black bar at an upper portion, a lower portion, or the upper and lower portions of the external window, based on the ratio information and a comparison of a length-to-width ratio of the external window.

The black bar determiner may be operable to form the black bar at a right side, a left side, or the left and right sides of the external window, based on the ratio information and a comparison of the length-to-width ratio of the external window.

The picture changing unit may be operable to change the size of the picture by zooming-in or zooming-out the picture. The picture changing unit may be operable to be operable to change the position of the picture by moving the picture up, down, left, and/or right.

The coordinate determiner may be operable to generate a trimming coordinate value using the size of the black bar and a coordinate value of the display picture on the external window. The trimming coordinates may be, for example, coordinates of a left upper vertex and a right lower vertex of the display picture.

According to another aspect of the present invention, there is provided a trimming method in a digital camera having an external window, the trimming method comprising: determining a size of a black bar used to cover a part of the external window based on ratio information of a printing paper from a printer; changing a size or a position of a picture, or both the size and the position of the picture, based on a user input signal to create a display picture on the external window; and determining coordinates of the display picture based on the display picture and the size of the black bar.

For a better understanding of the invention, and to show how embodiments of the same may be carried into effect, reference will now be made, by way of example, to the accompanying diagrammatic drawings in which:
FIG. 1 is a diagram illustrating conventional trimming performed in a digital camera;
FIG. 2 is a flowchart illustrating a conventional trimming method;
FIG. 3 is a block diagram illustrating a trimming apparatus according to an exemplary embodiment of the present invention;
FIG. 4 is a diagram illustrating an operation of a black bar determiner, according to an exemplary embodiment of the present invention;
FIG. 5 is a diagram illustrating an operation of a coordinate determiner, according to an exemplary embodiment of the present invention;
FIG. 6 is a diagram illustrating another operation of the black bar determiner, according to an exemplary embodiment of the present invention; and
FIG. 7 is a flowchart illustrating a trimming method according to an exemplary embodiment of the present invention.

The present invention will now be described more fully with reference to the accompanying drawings.

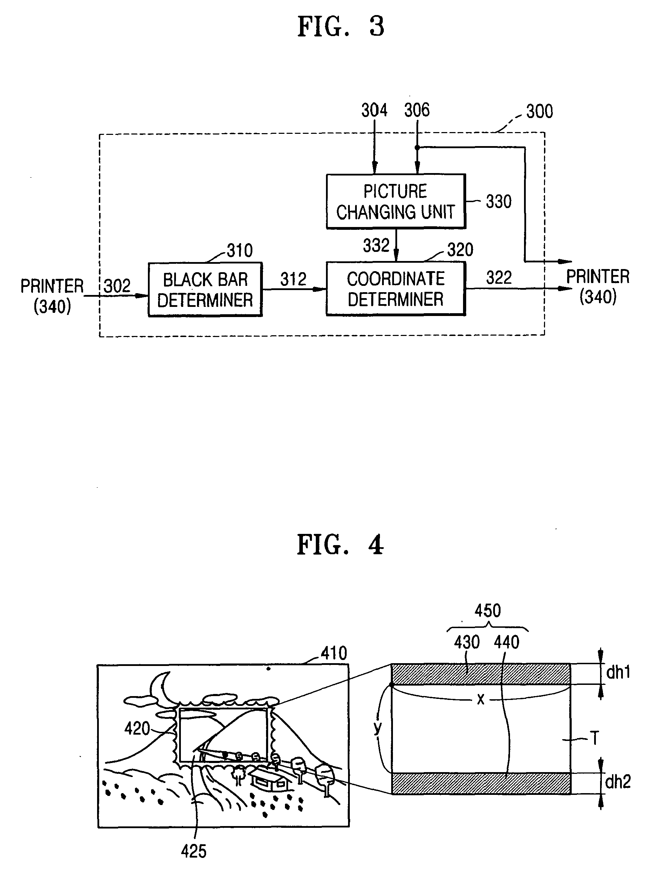

FIG. 3 is a block diagram illustrating a trimming apparatus according to an exemplary embodiment of the present invention. Referring to FIG. 3, the trimming apparatus 300 comprises a black bar determiner 310, a coordinate determiner 320, and a picture changing unit 330. The trimming apparatus 300 is embedded in a digital camera (not shown).

The black bar determiner 310 determines a size 312 of a black bar based on ratio information 302 secured from a printer 340. The ratio information 302 refers to a length-to-width ratio of a printing paper used to print a picture. If the digital camera supports a digital printing system (DPS), the ratio information 302 obtained from the printer 340 is included in printer information transmitted from the printer 340 to the digital camera when the digital camera and the printer 340 are connected to each other.

The black bar refers to a black window used to cover a portion of an external window of the digital camera. The black bar is used to intuitively display the size of the printing paper and a trimming picture to be printed by a user. The black bar will be described in more detail with reference to FIG. 4.

The picture changing unit 330 receives a user input signal 304 and a picture file 306, creates a picture using picture processing, and changes the size and position of the created picture, as displayed on the external window of the digital camera, based on the user input signal 304 in order to create a display picture 332.

The size is changed by zooming-in or zooming-out the picture on the external window of the digital camera using the picture file 306. The position is changed by moving up, down, left, and/or right the picture on the external window of the digital camera using the picture file 306. The user input signal 304 is used, for example, to zoom-in, zoom-out, move up, move down, move left, and move right the picture on the external window of the digital camera.

The coordinate determiner 320 determines trimming coordinates 322 based on the size 312 of the black bar and the display picture 332. The trimming coordinates 322 refer to coordinates that specify the trimming picture and include, for example, coordinates of a right upper vertex and a left lower vertex.

The printer 340 receives the picture file 306 and the trimming coordinates 322 from the trimming apparatus 300, and creates and prints the trimming picture based on the picture file 306 and the trimming coordinates 322.

FIG. 4 is a diagram illustrating an operation of the black bar determiner, according to an exemplary embodiment of the present invention. Referring to FIG. 4, a left picture illustrates a display picture 425 on an external window 420 of the digital camera in a full picture 410. A length-to-width ratio of the external window 420 is fixed when the digital camera is manufactured while a trimming picture ratio is variable. Therefore, a black bar 450 is required to display the trimming picture T having a ratio desired by the user. The black bar 450 may be formed at an upper portion, a lower portion, a left portion and/or a right portion of the external window 420.

As shown in FIG. 3, the black bar determiner 310 determines a size d of the black bar 450 based on ratio information 302 from the printer 340. The size d of the black bar 450 is a relative size of the black bar 450 used to cover the external window 420 in order to make the length-to-width ratio of the display picture 425 on the external window 420 identical to a length-to-width ratio x:y of the trimming picture T desired by the user.

If the length-to-width ratio of the external window 420 is 10x10, and the length-to-width ratio of the trimming picture T desired by the user is 10x7, black bars are formed at the top and bottom of the full picture 410 in which the size dh1 of a top black bar 430 is 1.5, and the size dh2 of a bottom black bar 440 is 1.5.

In another exemplary embodiment of the present invention, the black bar 450 is formed at the top or the bottom of the full picture 410. In this case, the size dh1 of the top black bar 430 is 3.0, and the size dh2 of the bottom black bar 440 is 0.0. Conversely, the size dh1 of the top black bar 430 may be 0.0, and the size dh2 of the bottom black bar 440 may be 3.0.

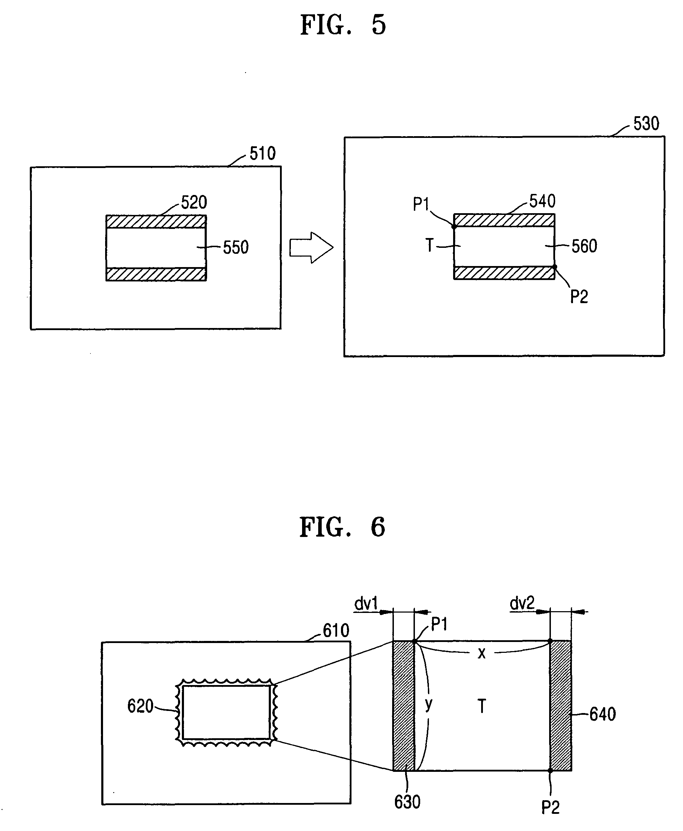

FIG. 5 is a diagram illustrating an operation of the coordinate determiner, according to an exemplary embodiment of the present invention. Referring to FIG. 3, the coordinate determiner 320 forms the trimming coordinates 322 based on the size 312 of the black bar and the display picture 332. The coordinate determiner 320 generates a coordinate value determined using the size 312 of the black bar and the coordinate value of the display picture 332 on the external window as a trimming coordinate value.

A picture 510 is created using the picture file 306 and a modified picture 530 is obtained by, for example, zooming-in the picture 510. In this example, the modified picture 530 is larger than the picture 510, and the position of the external window 520 changes as a moving key moves. The display picture 332 changes from a first picture 550 to a second picture 560. Such change is identical to a change of the external window 420 from a first position 520 to a second position 540.

The trimming picture T is the display picture 560 at the second position 540 and does not include the black bar in the display picture 560.

The trimming picture T is specified using a coordinate system to indicate the position of a pixel of the trimming picture T at the second position 540.

Coordinates of the trimming picture T, i.e., trimming coordinates, are coordinates of a left upper vertex P1 and a right lower vertex P2 of the trimming picture. As described above, the vertex P1 and the vertex P2 are based on the display picture (displayed on the external window) and the size of the black bar.

FIG. 6 is a diagram illustrating another operation of the black bar determiner, according to an exemplary embodiment of the present invention. Referring to FIG. 6, a left picture illustrates a display picture 625 on an external window 620 of the digital camera in a full picture 610. The black bar 450 is formed at the left and right sides of the external window 620.

The black bar determiner forms the black bar at the upper portion, the lower portion, or the upper and lower portions of the external window 620, or at the right portion, the left portion, or the left and right portions of the external window 620, based on the ratio information 302 and a comparison of a length-to-width ratio of the external window 620. For example, if the length of the printing paper is longer than the length of the external window 620, the black bar is formed at the upper and lower portions of the external window 620, and if the width of the printing paper is wider than the width of the external window 620, the black bar is formed at the left and right portions of the external window 620.

As shown in FIG. 3, the black bar determiner 310 determines the size d of the black bar 450 based on ratio information 302 from the printer 340. The size d of the black bar 450 is a relative size of the black bar 450 used to cover the external window 420 in order to make the length-to-width ratio of the display picture 425 on the external window 420 identical to a length-to-width ratio x:y of the trimming picture T desired by the user.

If the length-to-width ratio of the external window 620 is 10x10, and the length-to-width ratio of the trimming picture T desired by the user is 7x10, black bars are formed at the left and right sides of the full picture 610 in which the size dv1 of a left black bar 630 is 1.5, and the size dv2 of a right black bar 640 is 1.5.

In another exemplary embodiment, the black bar 450 is formed at the left or right side of the full picture 610. In this exemplary embodiment, the size dv1 of the left black bar 630 is 3.0, and the size dv2 of the right black bar 640 is 0.0. Conversely, the size dv1 of the left black bar 630 may be 0.0, and the size dv2 of the right black bar 640 may be 3.0.

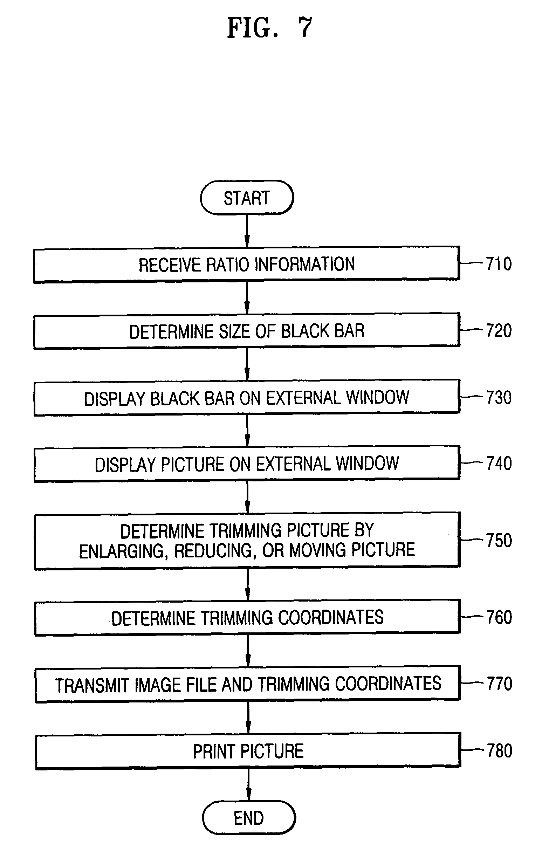

FIG. 7 is a flowchart illustrating a trimming method, according to an exemplary embodiment of the present invention. Referring to FIG. 7, a digital camera receives ratio information of a printing paper (Operation 710). If the digital camera supports the DPS, ratio information is included in printing information, and transmitted from the printer to the digital camera immediately after the printer and the digital camera are connected to each other.

The digital camera determines the size of a black bar based on the received ratio information (Operation 720). The black bar is used to cover an external window of the digital camera and determines a length-to-width ratio of a trimming picture.

The digital camera displays the black bar having the size of the black bar determined at Operation 720 on the external window of the digital camera (Operation 730). The digital camera displays a picture on the external window by image-processing a pickup image file (Operation 740).

A user determines the trimming picture by, for example, zooming-in, zooming-out, moving up, moving down, moving left, and moving right the picture displayed in Operation 740 (Operation 750) and a new display picture displayed on the external window is the trimming picture.

The digital camera determines trimming coordinates, i.e., coordinates of the display picture, using the display picture determined in Operation 750 and the size of the black bar determined in Operation 720 (Operation 760). For example, the trimming coordinates are coordinates of a left upper vertex and a right lower vertex of the display picture (i.e., the trimming picture).

The digital camera transmits the trimming coordinates determined in Operation 760 and the image file to the printer (Operation 770).

The printer prints the trimming picture using the trimming coordinates and the image file (Operation 780). The printer creates the picture by image-processing the image file and prints a part of the picture corresponding to the trimming coordinates.

It is possible for exemplary embodiments of the present invention to be realized on a computer-readable recording medium as a computer-readable code. Computer-readable recording media include any kind of recording device that stores computer system-readable data, such as ROMs, RAMs, CD-ROMs, magnetic tapes, floppy discs, optical data storage, etc. Computer-readable recording media can also be realized in the form of a carrier wave (e.g., transmissions through the Internet).
Exemplary embodiments of the present invention provide a trimming apparatus and a trimming method for fixing an external window of a digital camera and moving a picture, thereby providing a user with an accurate way to select a trimming picture.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A trimming apparatus in a digital camera having an external window (420), the trimming apparatus comprising:
a black bar determiner (310) which is operable to determine a size of a black bar (450) which covers a part of the external window (420) based on ratio information of a printing paper received from a printer (340);
a picture changing unit (330) which is operable to change at least one of a size and a position of a picture based on a user input signal to create a display picture on the external window (420); and
a coordinate determiner (320) which is operable to determine a coordinate of the display picture based on the display picture and the size of the black bar (450).

2. The apparatus of claim 1, wherein the black bar determiner (310) is operable to form the black bar (450) at an upper portion, a lower portion, or the upper and lower portions of the external window (420), based on the ratio information and a comparison of a length-to-width ratio of the external window (420).

3. The apparatus of claim 1 or claim 2, wherein the black bar determiner (310) is operable to form the black bar (450) at a right side, a left side, or the left and right sides of the external window (420), based on the ratio information and a comparison of a length-to-width ratio of the external window (420).

4. The apparatus of any preceding claim, wherein the picture changing unit (330) is operable to change the size of the picture by zooming-in or zooming-out the picture.

5. The apparatus of any preceding claim, wherein the picture changing unit (330) is operable to change the position of the picture by moving the picture at least one of up, down, left, and right.

6. The apparatus of any preceding claim, wherein the coordinate determiner (320) is operable to generate a trimming coordinate value based on the size of the black bar (450) and a coordinate value of the display picture on the external window (420).

7. The apparatus of claim 6, wherein trimming coordinate values are coordinates of a left upper vertex and a right lower vertex of the display picture.

8. A trimming method in a digital camera having an external window (420), the trimming method comprising:
determining a size of a black bar (450) which covers a part of the external window (420) based on ratio information of a printing paper from a printer (340);
changing at least one of a size and a position of a picture based on a user input signal to create a display picture on the external window (420); and
determining a coordinate of the display picture based on the display picture and the size of the black bar (450).

9. The method of claim 8, wherein the black bar (450) is formed at an upper portion, a lower portion, or the upper and lower portions of the external window (420), based on the ratio information and a comparison of a length-to-width ratio of the external window (420).

10. The method of claim 8 or claim 9, wherein the black bar (450) is formed at a right side, a left side, or the left and right sides of the external window (420), based on the ratio information and a comparison of a length-to-width ratio of the external window (420).

11. The method of any one of claims 8 to 10, wherein the changing at least one of the size and the position of the picture comprises changing the size of the picture by zooming-in or zooming-out the picture.

12. The method of any one of claims 8 to 11, wherein the position of the picture is changed by moving the picture at least one of up, down, left, and right.

13. The method of any one of claims 8 to 12, wherein the determining the coordinate comprises generating a trimming coordinate value based on the size of the black bar (450) and a coordinate value of the display picture on the external window (420).

14. The method of claim 13, wherein trimming coordinates are coordinates of a left upper vertex and a right lower vertex of the display picture.

15. A digital camera comprising an external window (420) and a trimming apparatus, the trimming apparatus comprising:
a black bar determiner (310) which is operable to determine a size of a black bar (450) used to cover a part of the external window (420) based on ratio information of a printing paper received from a printer (340);
a picture changing unit (330) which is operable to change at least one of a size and a position of a picture based on a user input signal to create a display picture on the external window (420); and
a coordinate determiner (320) which is operable to determine a coordinate of the display picture based on the display picture and the size of the black bar (450).

16. The digital camera of claim 15, wherein the external window (420) is a liquid crystal display screen.

17. A computer-readable storage medium having embodied thereon a computer program for executing a trimming method, the trimming method comprising:
determining a size of a black bar (450) which covers a part of the external window (420) based on ratio information of a printing paper from a printer (340);
changing at least one of a size and a position of a picture based on a user input signal to create a display picture on the external window (420); and
determining a coordinate of the display picture based on the display picture and the size of the black bar (450).
